# EUROPEAN PATENT SPECIFICATION

(11) **EP 3 289 196 B1**
(45) Date of publication and mention of the grant of the patent: **16.08.2023**
(21) Application number: 16786933.8
(22) Date of filing: 19.04.2016
(51) Int. Cl.: B01F 23/213, B01F 25/314, B01F 25/4314, F01N 3/20, F01N 3/28, B01D 53/94, B01F 25/00

(54) **MIXER WITH INTEGRATED DOSER CONE**
MISCHER MIT INTEGRIERTEM DOSIERKONUS
MÉLANGEUR POURVU D'UN CÔNE DOSEUR INTÉGRÉ

(30) Priority: 30.04.2015 US 201562155025 P; 12.06.2015 US 201514737546
(43) Date of publication of application: 07.03.2018
(73) Proprietor: Faurecia Emissions Control Technologies, USA, LLC, Columbus, Indiana 47201 (US)
(72) Inventor: ALANO, Eduardo, Columbus, IN 47203 (US); MCPEEK, Blake Lee, Columbus, Indiana 47201 (US)
(74) Representative: Prinz & Partner mbB
(86) International application number: PCT/US2016/028237
(87) International publication number: WO 2016/176078

(56) References cited:
- EP-A1- 3 018 311
- WO-A1-2014/051617
- WO-A1-2015/012829
- DE-A1-102006 011 655
- KR-A- 20110 049 152
- US-A1- 2009 107 126
- US-A1- 2011 094 206
- US-A1- 2012 216 513

## Description

### CROSS-REFERENCE TO RELATED APPLICATION

This application claims priority to U.S. Application No. 15/132,473, filed April 19, 2016, which is a continuation-in-part application claiming priority to United States Patent Application No. 14/737,546, filed June 12, 2015, which claims priority to United States Provisional Patent Application No. 62/155,025, filed April 30, 2015.

### BACKGROUND OF THE INVENTION

An exhaust system conducts hot exhaust gases generated by an engine through various exhaust components to reduce emissions and control noise. The exhaust system includes an injection system that injects a diesel exhaust fluid (DEF) or a reducing agent, such as a solution of urea and water for example, upstream of a selective catalytic reduction (SCR) catalyst. A mixer is positioned upstream of the SCR catalyst and mixes engine exhaust gases and products of urea transformation. The injection system includes a doser that sprays the urea into the exhaust stream. The urea should be transformed as much as possible into ammonia (NH3) before reaching the SCR catalyst. Thus, the droplet spray size plays an important role in reaching this goal.

In one known configuration, the mixer includes an outer housing with an opening that receives the doser. A cone is aligned with this opening to provide a widening spray area into the internal cavity of the outer housing. The widening spray area facilitates a more thorough distribution of spray droplets over a larger area as the spray enters the exhaust gas stream.

The industry is moving towards providing more compact exhaust systems, which results in reduced volume of the system. Systems that spray larger size droplets may not be able to provide adequate transformation of urea when used in more compact system configurations. As such, smaller droplet size dosers are required for these more compact configurations.

The smaller the droplet size, the more effective the transformation into ammonia is, due to the increased surface contact area. However, the spray generated by small droplet dosers is very sensitive to recirculation flow. Typically, an area located at a tip of the doser has a vortex of recirculating flow. This vortex pushes the spray droplets towards the walls of the mixer and onto the tip of the doser, which creates deposit initiation sites. In configurations that utilize a cone, deposit initiation sites have been found on the wall of the cone. The deposits in these sites build up over time and can adversely affect system operation. For example, there may be a lower ammonia uniformity index, there may be an increased pressure drop across the mixer, or they may be a peak of ammonia emissions during active diesel particulate filter (DPF) regeneration.

WO 2015/012829 discloses a mixer according to the preamble of claim 1. It describes a vehicle exhaust system that includes a mixer and a doser that sprays a reducing agent into the mixer to be thoroughly mixed with engine exhaust gases prior to introduction of the mixture into a downstream exhaust component.

### SUMMARY OF THE INVENTION

The invention is defined by a mixer according to claim 1.

A mixer for a vehicle exhaust system includes a mixer housing defining a mixer central axis and having an inlet at an upstream end and an outlet at a downstream end. An upstream baffle is in the housing at the upstream end and includes at least one inlet opening configured to receive engine exhaust gas. A downstream baffle is in the mixer housing at the downstream end such that the downstream baffle is axially spaced from the upstream baffle. The downstream baffle includes at least one outlet opening. A housing opening is formed within the mixer housing at a location between the upstream and downstream baffles, and which is configured to receive a doser. A sub-assembly is aligned with the housing opening to facilitate mounting of the doser. The sub-assembly includes a cone, a manifold and an intermediate plate. The cone includes a cone outlet opening aligned with the housing opening, a tapered body portion that extends from a narrow end to a wide end, and an extension transition portion that extends from the wide end of the cone to provide a wall that surrounds the cone outlet opening. The manifold includes an interface portion with a doser opening that is aligned with the housing opening, one or more attachment arms that extend from the interface portion in a direction toward the wall of the cone, and one or more flanges that extend from the interface portion towards the wall of the cone. The one or more attachment arms and the one or more flanges are disposed to create one or more chambers shaped to direct the engine exhaust gas to the doser opening. The intermediate plate comprises a wedge-shape having an apex near a mixer central axis and widening radially outward in a direction toward the outer housing, and wherein the intermediate plate comprises a flat portion defined by a first edge extending radially outward from the apex, a second edge extending radially outward from the apex and circumferentially spaced from the first edge, and an outer peripheral edge connecting the first and second edges to define the wedge-shape.

In a further embodiment of the above, the doser is configured to spray a reducing agent into an area between the upstream baffle and the downstream baffle such that a mixture of reducing agent and exhaust gas exits the mixer housing, and wherein the mixture moves through a rotational flow path that is at least 360 degrees before exiting the mixer housing.

In a further embodiment of any of the above, the upstream baffle includes a first portion, a second portion offset from the first portion in a direction along the mixer central axis, and a third portion that transitions from the first portion to the second portion, and wherein the at least one inlet opening comprises at least one primary inlet opening and one or more secondary inlet openings; and the downstream baffle includes a first portion, a second portion offset from the first portion in a direction along the mixer central axis, and a third portion that transitions from the first portion to the second portion, and wherein the at least one outlet opening comprises at least one primary outlet opening and one or more secondary outlet openings.

In a further embodiment of any of the above, an extension plate is positioned within the mixer housing downstream of the downstream baffle, the extension plate including at least one plate main outlet opening such that from an upstream location between the upstream baffle and downstream baffle at the doser axis to a downstream location at a center axis of the plate main outlet opening, the mixture goes through at least 390 degrees rotation.

In a further embodiment of any of the above, at least one of the secondary inlet and outlet openings includes a lip, and wherein the lip extends away from a respective one of the upstream baffle and the downstream baffle to define a lip height that is at least three times a material thickness of the respective one of the upstream baffle and the downstream baffle.

In a further embodiment of any of the above, the first portion of the upstream baffle comprises a first flat surface, the second portion comprises a second flat surface that is smaller than the first flat surface, and the third portion comprises a helical surface that transitions from the first flat surface to the second flat surface, and wherein the upstream baffle includes a vertical wall portion extending between the first and second flat surface which includes the at least one primary inlet opening.

In a further embodiment of any of the above, the at least one primary inlet opening comprises at least three inlet openings formed in the vertical wall portion.

In a further embodiment of any of the above, wherein the first flat surface comprises at least half of the upstream baffle.

In a further embodiment of any of the above, the one or more secondary inlet openings are only formed within the first flat surface of the upstream baffle with a remaining portion of the upstream baffle being free from secondary inlet openings.

In a further embodiment of any of the above, the first portion of the downstream baffle comprises a first flat surface, the second portion comprises a second flat surface offset from the first flat surface, and the third portion comprises a helical surface that transitions from the first flat surface to the second flat surface, and wherein the primary outlet opening comprises an open area formed within a vertical offset between the first and second flat surfaces of the downstream baffle.

In a further embodiment of any of the above, at least half of the downstream baffle has a solid surface free from secondary outlet openings, and wherein the solid surface of the downstream baffle is aligned with the doser axis such that a spray zone defined by the doser extends over the solid surface without encountering any secondary outlet openings.

In a further embodiment of any of the above, the cone has a narrow end with an inlet opening and a tapered body portion extending from the narrow end to the wide end that provides the outlet opening, and where the extension portion surrounds the outlet opening and extends along an inner circumference of the mixer housing.

In a further embodiment of any of the above, the cone has a narrow end with an inlet opening and a tapered body portion extending from the narrow end to the wide end that provides the outlet opening, and the intermediate plate is positioned between the upstream and downstream baffles, the intermediate plate being attached to the extension portion, , wherein the extension portion is connected to the intermediate plate along at least a portion of the outer peripheral edge, and wherein the intermediate plate includes a flange portion extending outwardly from the outer peripheral edge, and wherein an edge of the flange portion is attached to the extension portion.

These and other features of this application will be best understood from the following specification and drawings, the following of which is a brief description.

### BRIEF DESCRIPTION OF THE DRAWINGS

Figure 1 schematically illustrates one example of an exhaust system with a mixer according to the subject invention.
Figure 2A is a perspective view of an upstream end of a mixer according to the subject invention.
Figure 2B is a perspective of an upstream baffle from Figure 2A.
Figure 3 is a perspective view of a downstream end of the mixer according to the subject invention.
Figure 4A is a perspective front view of a mixer sub-assembly including a cone, manifold, and intermediate plate.
Figure 4B is a perspective rear view of the sub-assembly of Figure 4A.
Figure 4C is a perspective top view of the sub-assembly of Figure 4A.
Figure 5 is a perspective view of the sub-assembly of Figure 4A included within the mixer.
Figure 6 is a schematic section view of the cone in relation to a mixer inner wall.
Figure 7 is a perspective view another example of a cone and extension portion.
Figure 8 is a perspective view of the embodiment of Figure 7 and the manifold.
Figure 9 is a perspective view of the sub-assembly of Figure 8 included within the mixer.
Figure 10 is a perspective view from an inlet end of another embodiment of a mixer incorporating the subject invention.
Figure 11 is a perspective view from an outlet end of the mixer of Figure 10.
Figure 12A is a section view of baffles from the mixer shown in Figure 2A
Figure 12B is a section view of baffles from the mixer shown in Figure 10.
Figure 13 is a perspective view of a downstream baffle and sub-assembly from the mixer of Figure 10.
Figure 14 is a perspective view from the inlet end of the mixer of Figure 12 but with the upstream baffle being removed.
Figure 15A is a perspective view from the outlet end of the mixer of Figure 10 without an extension plate.
Figure 15B is a perspective view from the outlet end of the mixer of Figure 10 with a first embodiment of an extension plate.
Figure 15C is a perspective view from the outlet end of the mixer of Figure 10 with a second embodiment of an extension plate.
Figure 16A is an end view of the mixer of Figure 15A showing a rotational flow path for the mixer of Figure 15A.
Figure 16B is an end view of the mixer of Figure 15B showing a rotational flow path for the mixer of Figure 15B.
Figure 16C is an end view of the mixer of Figure 15C showing a rotational flow path for the mixer of Figure 15C.
Figure 17A is a section view taken along the line 17A-17A as indicated in Figure 15C.
Figure 17B is a magnified view of the area identified in Figure 17A.
Figure 18A is an exploded view of the mixer of Figure 10.
Figure 18B is an exploded view of a sub-assembly and components as shown in Figure 18A.
Figure 18C is an exploded view from an outlet side of an extension baffle, downstream baffle and mounting ring from Figure 18A.
Figure 18D is an exploded view from an outlet side of an extension baffle, downstream baffle and mounting ring from Figure 18C.

### DETAILED DESCRIPTION

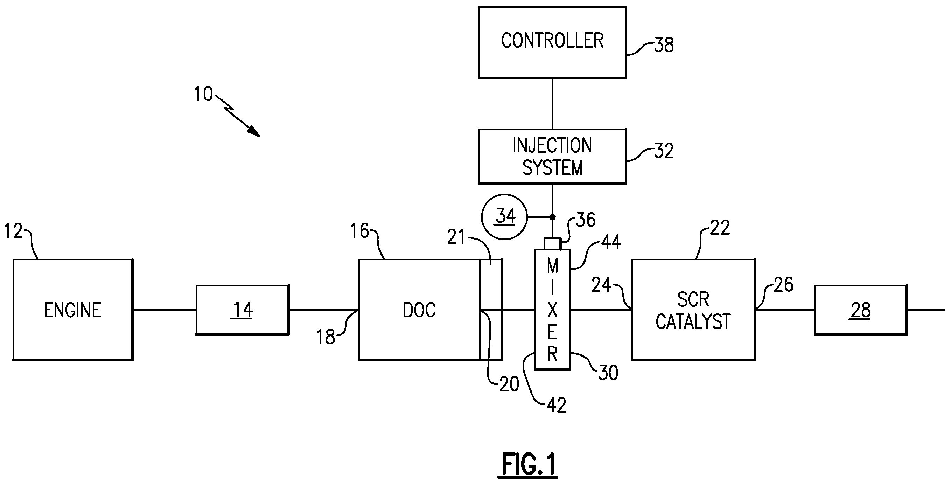

Figure 1 shows a vehicle exhaust system 10 that conducts hot exhaust gases generated by an engine 12 through various upstream exhaust components 14 to reduce emission and control noise as known. The various upstream exhaust components 14 can include one or more of the following: pipes, filters, valves, catalysts, mufflers etc.

In one example configuration, the upstream exhaust components 14 direct exhaust gases into a diesel oxidation catalyst (DOC) 16 having an inlet 18 and an outlet 20. Downstream of the DOC 16 is an optional component 21 that may be a diesel particulate filter (DPF), which is used to remove contaminants from the exhaust gas as known. In one example, the component 21 may be the DPF and a subsequent portion of exhaust pipe with an optional elbow type connection. In another example, the component 21 may be a portion of exhaust pipe with an optional elbow type connection. Downstream of the DOC 16 and optional component 21 is a selective catalytic reduction (SCR) catalyst 22 having an inlet 24 and an outlet 26. The inlet 24 may be located away from the mixer outlet face 44. In this example an exhaust system pipe will drive the exhaust flow to the catalyst 22. The outlet 26 communicates exhaust gases to downstream exhaust components 28. Optionally, component 22 can comprise a catalyst that is configured to perform a selective catalytic reduction function and a particulate filter function. The various downstream exhaust components 28 can include one or more of the following: pipes, filters, valves, catalysts, mufflers etc. These upstream 14 and downstream 28 components can be mounted in various different configurations and combinations dependent upon vehicle application and available packaging space.

A mixer 30 is positioned downstream from the outlet 20 of the DOC 16 or component 21 and upstream of the inlet 24 of the SCR catalyst 22. The upstream catalyst and downstream catalyst can be in-line, in parallel or any other configuration. The mixer 30 (as shown in the in-line configuration) is used to generate a swirling or rotary motion of the exhaust gas. An injection system 32 is used to inject a gaseous or liquid reducing agent, such as a solution of urea and water for example, into the exhaust gas stream upstream from the SCR catalyst 22 such that the mixer 30 can mix the injected substance and exhaust gas thoroughly together. In an example, the injection system 32 includes a fluid supply 34, a doser 36, and a controller 38 that controls injection of the reducing agent as known. Optionally, component 36 can be a pipe of introduction of gaseous reducing agent. Operation of the controller 38 to control injection of the reducing agent is known and will not be discussed in further detail.

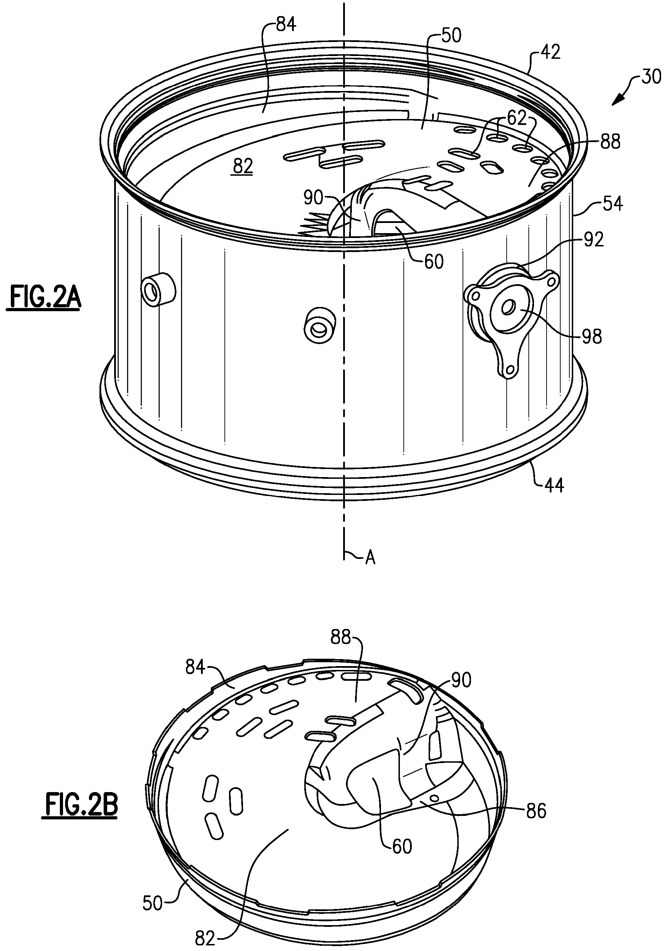

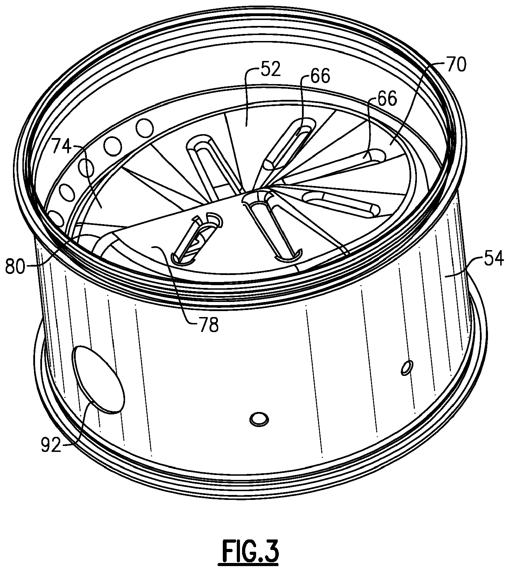

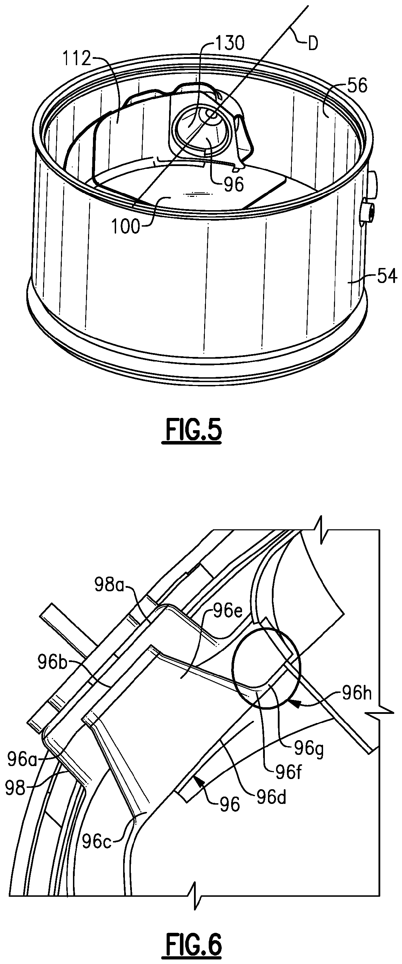

The mixer 30 is shown in greater detail in Figures 2-9. As shown in Figure 2A, the mixer 30 comprises a mixer outer housing having an inlet end 42 configured to receive the engine exhaust gases and an outlet end 44 to direct a mixture of swirling engine exhaust gas and products transformed from urea to the SCR catalyst 22. Further, the mixer body includes an upstream baffle 50 (Figures 2A-2B) and a downstream baffle 52 (Figure 3) that are surrounded by an outer peripheral wall 54. The upstream baffle 50 is configured to initiate swirling of the exhaust gas flow. The mixer 30 also includes an inner peripheral surface 56 (Figure 5) that faces inwardly toward a mixer center axis A.

The upstream baffle 50 at the inlet 42 may include a large inlet opening 60 that can receives the majority of the exhaust gas (for example, the large inlet opening 60 receives 60% of the exhaust mass flow rate), and which is configured to initiate the swirling motion. The upstream baffle 50 also includes a plurality of perforations, slots, or additional inlet openings 62 that ensure optimal homogenization of exhaust gases and reduces back pressure. The upstream baffle 50 and the plurality of inlet openings 60, 62 cooperate to initiate a swirling motion to the exhaust gas as the exhaust gas enters the inlet end 42 of the mixer 30.

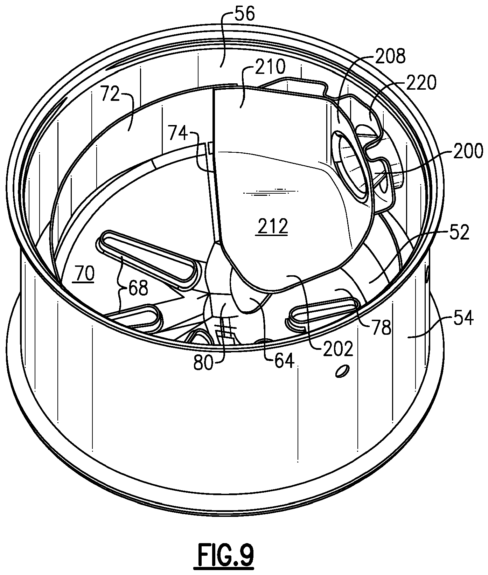

The downstream baffle 52 includes a large outlet opening 64 (Figure 9) through which the majority of the exhaust gas exits. The downstream baffle 52 also includes a plurality of additional outlet openings 66 surrounded by lips 68 through which the exhaust gas exits. The lips 68 keep the urea inside the mixer 30 in order to increase DEF transformation and improve mixing performance. The lips 68 also generate additional turbulence to further improve mixing performance. The downstream baffle 52 comprises a helical portion 70. An axis of the helix is the center axis of the mixer represented by A (Figure 2) with a rim 72 formed about an outer perimeter of the helical portion 70. The rim 72 extends in an upstream direction.

The large outlet opening 64 comprises primary outlet opening and is larger than the other outlet openings 66. The helical portion 70 includes the additional outlet openings 66. The helical portion 70 is formed by an upstream end portion 74 and a downstream end portion 78. Portions 74 and 78 include flat surface portions perpendicular to the mixer axis A (Figure 2A) with the helical portions extending therebetween. A wall 80 extends between the flat surface of the downstream end portion 78 and the flat surface of the upstream end portion 74, and the primary outlet opening 64 is formed within the wall 80.

Similarly, as shown in Figure 2B, the upstream baffle 50 comprises a helical portion 82 with a rim 84 formed about an outer perimeter of the helical portion 82. The large inlet opening 60 comprises a primary inlet opening and may be larger than the other inlet openings 62. The helical portion 82 includes additional inlet openings 62 and has an upstream end portion 88 and a downstream end portion 86. A wall 90 extends from the upstream portion 88 to the downstream portion 86 and the primary inlet opening 60 is formed within the wall 90.

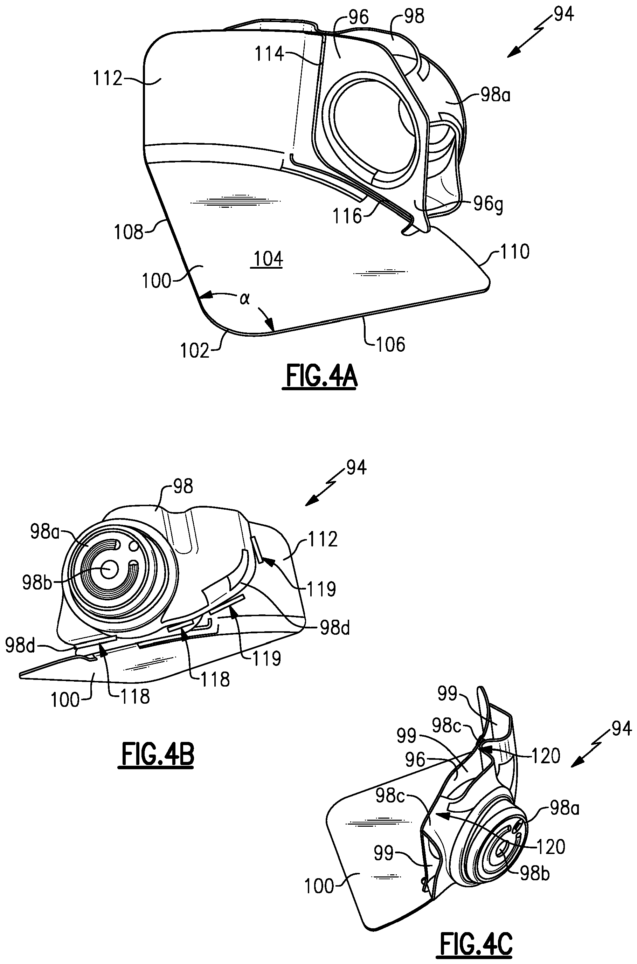

The outer peripheral wall 54 includes an opening 92 formed at a location between the upstream 50 and downstream 52 baffles. The opening 92 is configured to receive the doser 36. Figures 4A-4C show a sub-assembly 94 that is aligned with the opening 92 to facilitate mounting of the doser 36 to the mixer 30 such that spray is introduced into the exhaust gas stream in the desired orientation. The sub-assembly 94 includes a cone 96, a manifold 98, and an intermediate plate 100. The cone 96 has a narrow end 96a with an inlet opening 96b and a wide end 96c with an outlet opening 96d. A tapered body portion 96e extends from the narrow end 96a to the wide end 96c. An extension transition portion 96f extends from the wide end 96c of the cone 96 to provide a wall 96g that surrounds the outlet opening 96d. This extension transition portion 96f provides a smooth transition (as indicated at 96h in Figure 6) between the tapered portion of the cone 96 and the wall 96g, which reduces deposit build-ups in this area.

As best shown in Figures 4B-4C, the manifold 98 includes an interface portion 98a with a doser opening 98b that is aligned with the opening 92 in the outer peripheral wall 54. One or more attachment arms 98c extend from the interface portion 98a in a direction toward the wall 96g of the cone 96. One or more flanges 98d extend from the interface portion 98a towards the wall 96g or the flange 112. Arms 98c and flanges 98d are disposed in a certain way to create one or more chambers 99. The exhaust flow goes through the chamber 99 and is directed to the inlet opening 96b. The inlet opening 96b of the cone 96 is aligned with the doser opening 98b such that the narrow end 96a of the cone 96 fits within the interface portion 98a of the manifold 98.

The intermediate plate 100 is attached to the manifold 98 and the cone 96 to form the sub-assembly 94. The intermediate plate 100 has an apex 102 near the mixer central axis A and which widens radially outward in a direction toward the outer peripheral wall 54. The intermediate plate 100 comprises a flat portion 104 defined by a first edge 106 extending radially outward from the apex 102, a second edge 108 extending radially outward from the apex 102 and circumferentially spaced from the first edge 106, and an outer peripheral edge 110 connecting the first 106 and second 108 edges to define a wedge-shape. The first edge 106 comprises an inlet side of the intermediate plate 100 and the second edge 108 comprises the outlet side of the intermediate plate 100. The angle defined by edge 106 and edge 108 can vary from 70deg to 270deg. The flat portion 104 can have an adjacent helical portion at the outlet side, which is the edge 108.

In one example, the intermediate plate 100 includes a flange portion 112 that extends in an upstream direction from the outer peripheral edge 110. The flange portion 112 does not extend along the entire outer peripheral edge 110. As shown in in Figure 4A, the wall 96g of the cone 96 can be attached to one edge of the flange portion 112 (as indicated at 114) and can be also attached along a portion of the outer peripheral edge 110 (as indicated at 116). As shown in Figures 4B-4C, the flange 98d of the manifold 98 is attached with weld(s) 118 to the wall portion 96g of the cone 96 and weld(s) 119 to the flange portion 112 of the intermediate plate 100. As shown in Figure 4C, the arm portions 98c of the manifold 98 are attached to the wall portion 96g of the cone 96 with welds 120 to form the sub-assembly 94.

The sub-assembly 94 is then placed within the mixer 30, as shown in Figure 5, such that the flange portion 112 of the intermediate plate can be welded, or otherwise attached, to the rim 72 of the downstream baffle 52. As shown, the cone 96 and the interface portion 98a of the manifold 98 are nested within the opening 92 in the mixer 30. As shown, the opening defines a doser axis D that optionally does not intersect the mixer central axis A (Figure 5).

As best shown in Figure 4A and 5, the wall portion 96g and the cone body are integrally formed together as a single-piece component. An extension transition portion 96f extends (Figure 6) from an inner surface 130 of the tapered portion of cone 96 at the wide end 96c to the wall 96g. As discussed above the, the wall 96g provides a smooth transition 96h into the mixer itself (Figure 6) to reduce the risk of DEF deposit formation. Further, this configuration provides a simpler assembly that reduces manufacturing time and costs, as well as increasing overall robustness of the mixer.

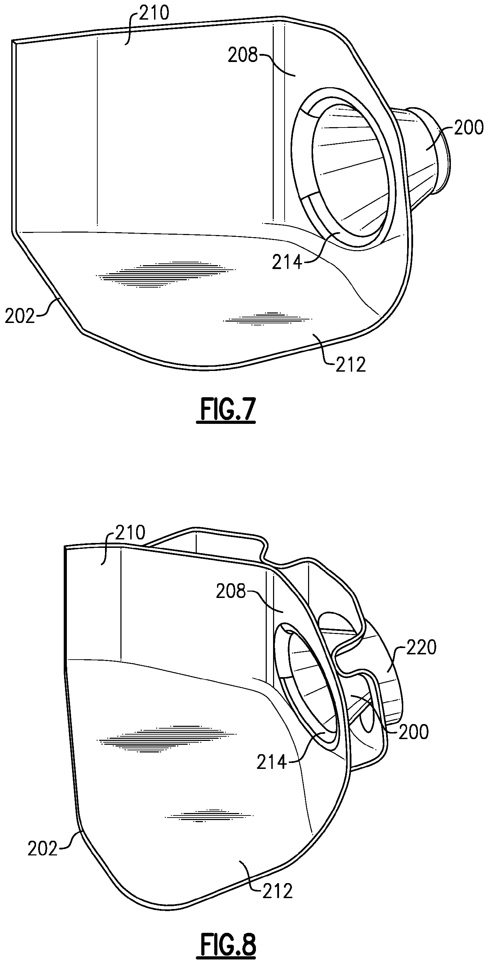

In the example shown in Figures 4-6, the sub-assembly 94 includes the intermediate plate 100 as a separate component that is attached to the cone 96. In another example, embodiment shown in Figures 7-9, a cone 200 can be integrally formed with an intermediate plate 202 as a single-piece component. The cone 200 includes an extension portion 214 surrounding an outlet opening that provides a wall 208. This wall 208 then extends integrally into a circumferential wall portion 210 and a base plate portion 212. The wall portion 210 is similar in form to the flange portion 112, and the base plate portion 212 is similar to the wedge-shaped plate portion 104, of the separate intermediate plate shown in Figure 4A. An extension portion 214 transitions from an inner surface of the cone 200 to the wall 208.

The cone 200 is attached to a manifold 220 (Figure 8) that is similar to the manifold 98. This sub-assembly is then installed within the mixer 30 as shown in Figure 9.

The intermediate plate 100 and plate portion 212 for these example embodiments, are positioned between the upstream 50 and downstream 52 baffles to block direct flow from the primary inlet opening 60 to the primary outlet opening 64. This blockage provides for a rotational flow path that directs exhaust gases exiting the primary inlet opening 60 through a rotation of more than 360 degrees about the mixer central axis A before exiting the primary outlet opening 64. This increased degree of rotation results in more thorough mixing of the reducing agent within the exhaust gas. Also, this more thorough mixing occurs without having to increase the overall axial mixer length according to the axis A direction.

Thus, the subject invention provides a compact mixer 30 that allows at least 360 degrees of flow path in order to increase mixing performance and enhance DEF transformation when a liquid reducing agent is used. Additionally, by providing an integrated doser cone 96, a smooth transition is provided at the interface between the cone outlet and inner mixer wall resulting in reduced deposit formation, which further improves performance. This improved performance is provided without increasing the axial length of the mixer and, further, does not adversely affect back pressure. For example, this 360 to 450 degree rotation flow path is provided within a mixer having an overall length that is 178 to 254 mm long according to the direction defined by axis A.

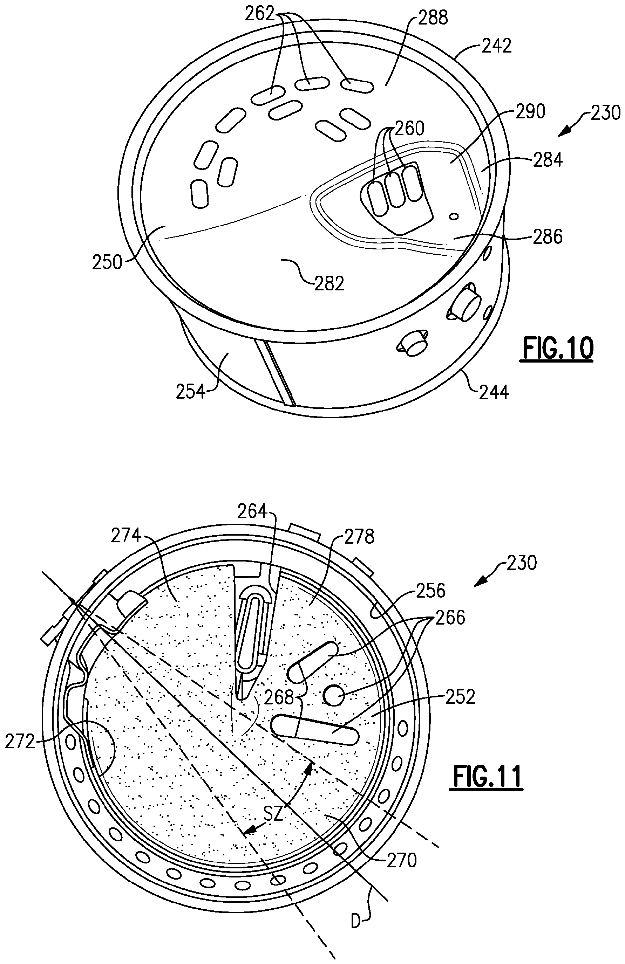

Another example of a mixer 230 is shown in Figure 10. In this example, the mixer 230 comprises a mixer body having an inlet end 242 configured to receive the engine exhaust gases and an outlet end 244 to direct a mixture of swirling engine exhaust gas and products transformed from urea to the SCR catalyst 22. Further, the mixer body includes an upstream baffle 250 (Figure 10) and a downstream baffle 252 (Figure 11) that are surrounded by an outer peripheral wall 254 of a ring-shaped structure. The upstream baffle 250 is configured to initiate swirling of the exhaust gas flow. The ring-shaped structure also includes an inner peripheral surface 256.

The upstream baffle 250 has an upstream end portion 288 and a downstream end portion 286 with a helical portion 282 transitioning between the upstream end portion 288 and the downstream end portion 286. An outer rim 284 is formed about an outer perimeter of the upstream baffle 250. The upstream end portion 288 provides a generally large flat area and the downstream end portion 286 comprises a generally smaller flat area that is offset from the flat area of the upstream end portion 288 in a direction along the axis A. The helical portion 282 comprises a surface that transitions between the two offset flat areas to facilitate the swirling motion.

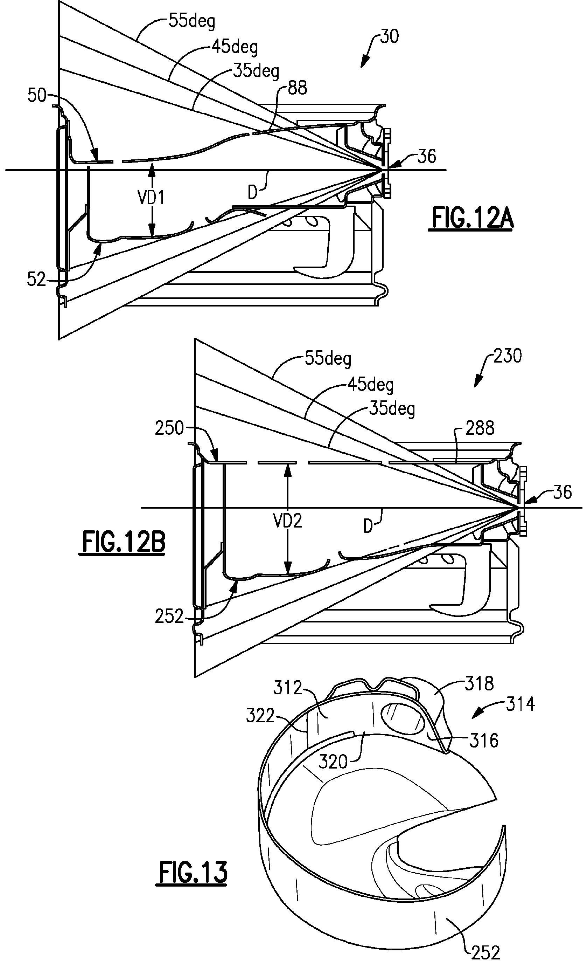

In the example shown, the flat area of the upstream end portion 288 comprises approximately at least 180 degrees, i.e. about half, of the surface area of the upstream baffle 250, with the helical portion 282 and flat area of the downstream end portion 286 comprising the other 180 degrees, i.e. the other half. Figure 12A, which corresponds to the embodiment of the upstream baffle 50 shown in Figure 2A, can be compared to Figure 12B, which corresponds to the upstream baffle 250 as shown in Figure 10. In the Figure 12A embodiment, the flat portion at the upstream end 88 is much smaller than the flat portion for the Figure 12B embodiment, and the helical portion 82 has a more gradual slope transitioning from the upstream end 88 to the downstream end 86. Figure 12B, which has the flat area extending over at least 180 degrees, has a helical portion 282 with a much steeper slope than the embodiment of Figure 12A. This provides for more room in a vertical direction within the mixing area of the mixer 230.

The doser axis D is shown in both Figures 12A and 12B. In the Figure 12A embodiment of the mixer 30 there is a first vertical distance VD1 between the baffles 50, 52. In the Figure 12B embodiment of the mixer 230 there is a second vertical distance VD2 between the baffles 250, 252 that is greater than the first vertical distance VD1. It is clear from Figures 12A and 12B, that the doser axis D, which corresponds generally to a center of a spray zone SZ (Figure 11), intersects with the upstream baffle 50 of the mixer 30 much sooner than the axis D intersects the upstream baffle 250 of the mixer 230 of Figure 12B. This improves the amount of penetration of the spray into the mixer 230 as there is more room as compared to the mixer 30 of Figure 2A.

The upstream baffle 250 also includes a vertical wall 290 that extends from the upstream portion 288 to the downstream portion 286, and which has the primary exhaust gas inlet into the mixer 230. Instead of having one large primary inlet opening 60 in the upstream baffle 50 (Figure 2A), this configuration includes a plurality of primary inlet openings 260 in the wall 290 of the upstream baffle 250 that receive the majority of the exhaust gas (for example, the primary inlet openings 260 receive 60% of the exhaust mass flow rate. The upstream baffle 250 also includes a plurality of secondary inlet openings 262 that ensure optimal homogenization of exhaust gases and reduces back pressure. The upstream baffle 250 and the inlet openings 260, 262 cooperate to initiate a swirling motion to the exhaust gas as the exhaust gas enters the inlet end 242 of the mixer 230.

As discussed above, the primary inlet openings 260 are formed within the wall 290. The flat area of the upstream end portion 288 includes the additional or secondary inlet openings 262. The secondary inlet openings 262 can be the same size and/or shape as the primary inlet openings, or could be slightly smaller and/or have a different shape. In one example, the baffle portion 282 and the flat area of the downstream end portion 286 do not include any secondary inlet openings, i.e. the secondary inlet openings 262 are only formed in the flat area of the upstream end portion 288.

In the example shown in Figure 10, there are three (3) primary inlet openings 260 that are used instead of the single primary inlet opening 60. It should be understood that, depending on the application, only two primary inlet openings 260, or more than three primary inlet openings 260 could be used. In one example, the primary inlet openings 260 have an elongated shape, such as a slot shape, with a larger dimension in a first direction to define a slot length, and a smaller dimension in a second direction to define a slot height. In the example shown, the larger dimension extends along the wall 290 in a direction that is from the flat area of the downstream end portion 286 toward the flat area of the upstream end portion 288.

In the example shown, the primary inlet openings 260 are the same size and are spaced apart from each other along the wall 290 in a radial direction. The openings 260 could also be orientated in a different configuration and have different sizes. One benefit have having multiple primary inlet openings 260 as opposed to a single large inlet opening is that the multiple inlet openings 260 help reduce the force of exhaust gas applied against the spray, which reduces the amount of spray that would be forced against the inner peripheral surface 272.

As shown in Figure 11, the downstream baffle 252 includes a large primary outlet opening 264 through which the majority of the exhaust gas exits. The downstream baffle 252 also includes one or more secondary outlet openings 266 surrounded by lips 268 through which the exhaust gas exits. The lips 268 keep the urea inside the mixer 230 to increase DEF transformation and generate additional turbulence to further improve mixing performance.

The downstream baffle 252 has an upstream end portion 274 and a downstream end portion 278 with a helical portion 270 transitioning between the upstream end portion 274 and the downstream end portion 278. An outer rim 272 is formed about an outer perimeter of the downstream baffle 252. The upstream end portion 274 comprises a flat area that transitions to a flat area at the downstream end portion 278 via the helical portion 270. The two flat areas are offset from each other in a direction along the axis A. The helical portion 270 comprises a surface that transitions between the two offset flat areas to facilitate the swirling motion. The downstream baffle 252 also includes a vertical wall 280 that extends from the upstream portion 274 to the downstream portion 278, and which has the primary outlet opening 264 that is larger than the secondary outlet openings 266. In the example shown, the primary outlet opening 264 comprises an open area formed within the vertical offset between the flat areas of the upstream end portion 274 and downstream end portion 278.

In the example shown, at least 180 degrees, i.e. at least half, of the downstream baffle has a solid surface, i.e. there are no secondary outlet openings 266. This solid surface of the downstream baffle 252 is aligned with the doser axis D such that a spray zone SZ extends over this solid surface as shown in Figure 11. The secondary openings 266 are thus formed in the downstream end portion 278 adjacent the primary outlet opening 264 and do not overlap the spray zone SZ. In the example shown, there are three secondary openings 266, each having a different size. Further, at least one opening is slot shaped and at least one opening is circular shaped; however, various combinations of shapes and sizes could be used. Further, it should be understood that more or less than three secondary openings could also be used depending upon the application.

With the mixer 230 as shown in Figures 10-11, the flat portion 104 of the intermediate plate 100 (Figure 4A) is no longer positioned between the baffles 250, 252. Instead, as shown in Figure 13, a sub-assembly 314 comprising a cone plate 316 and a manifold 318 are used in a manner that is similar to the cone plate 116 and manifold 118 of the mixer 30 as shown in Figures 5-6. The cone plate 316 is modified to include a wall portion 312 that is similar to the flange portion 112 of the mixer 30.

The manifold 318 is attached to the cone plate 316 in a manner similar to that described above with regard to the mixer 30. The sub-assembly 314 is then attached to the downstream baffle 252 with a first weld 320 along a circumferential edge of the cone plate 316 and with a second weld 322 along the wall portion 312. It should be understood that while welding interfaces are shown, other attachment methods could also be used, such as brazing for example.

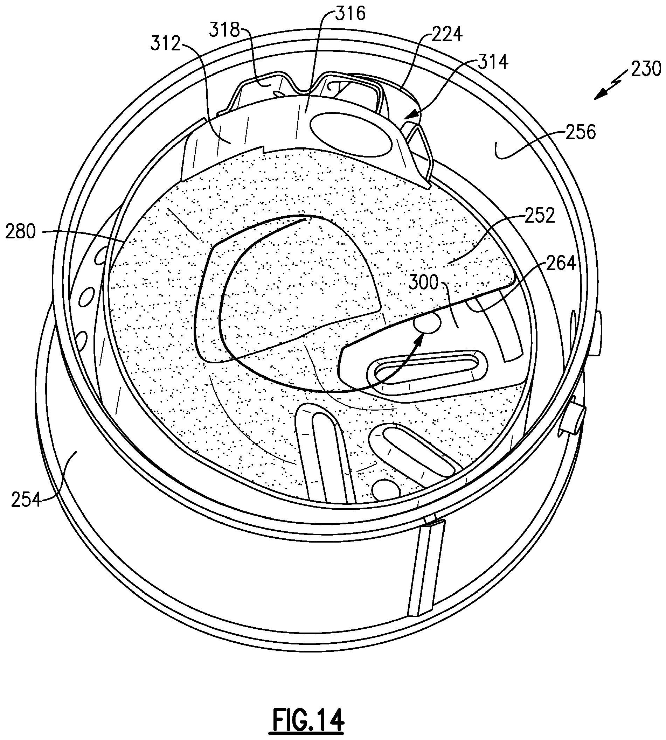

As shown in Figure 14, the outer peripheral wall 254 of the mixer 230 includes a doser mount area with a doser opening 224 to receive the doser 36. The upstream and downstream baffles 250, 252 are spaced apart from each other in an axial direction along a length of the mixer 230. The doser opening 224 for the doser 36 is positioned to spray the reducing agent into an area between the upstream baffle 250 and the downstream baffle 252.

When the mixture of spray and exhaust gas exits the primary outlet opening 264 of the downstream baffle 252, the mixture is directed against an extension baffle 300. Thus, the extension baffle 300 is located within the mixer 230 at a location that is downstream of the outlet or downstream baffle 252. The use of extension baffle 300 at this location improves flow distribution and results in better performance for the mixer 230 as compared to the mixer 30.

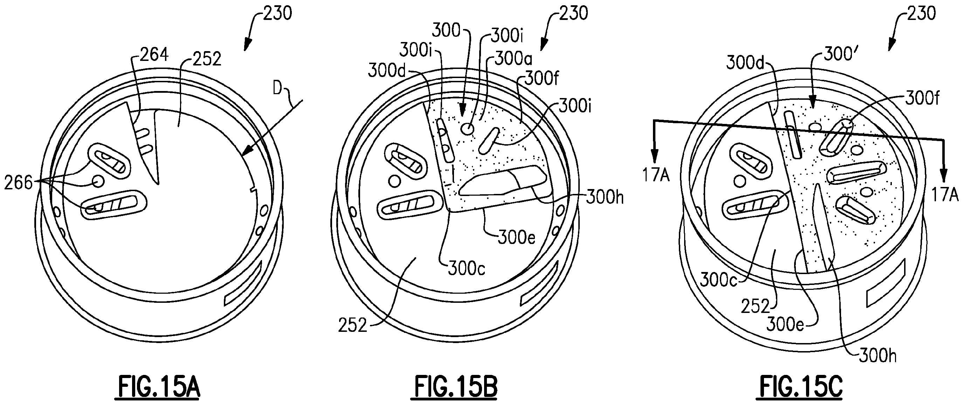

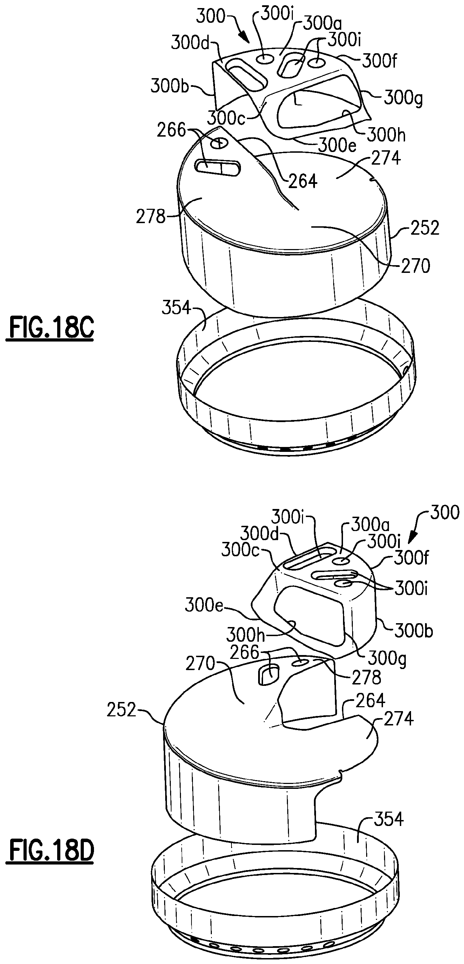

Figure 15A shows a view from the outlet end of the mixer 230 without the extension baffle 300. Figure 15B shows a first embodiment of the extension baffle 300 where the baffle 300 is configured to overlap approximately 90 degrees of the downstream baffle 252. Figure 15C shows a second embodiment of the extension baffle 300' where the baffle 300' is configured to overlap approximately 180 degrees of the downstream baffle. In each embodiment, the extension baffle 300, 300' includes a generally flat base 300a with circumferential wall portion 300b (Figures 18C-D) extending in an upstream direction from an outer peripheral edge of the base 300a.

The flat base 300a comprises a wedge shape that has an apex or center 300c near the mixer central axis A and which widens radially outward in a direction toward the outer peripheral wall 254. The flat base 300a is defined by a first edge 300d extending radially outward from the apex 300c, a second edge 300e extending radially outward from the apex 300c and circumferentially spaced from the first edge 300d, and an outer peripheral edge 300f connecting the first 300d and second 300e edges. The first edge 300d comprises an inlet side or upstream side of the extension baffle 300 and the second edge 300e comprises an outlet side or downstream side of the extension baffle 300. In the example shown, the angle defined by the edges 300d, 300e is approximately 90 degrees; however the angle could be increased or decreased as needed dependent upon the application.

As discussed above, the circumferential wall portion 300b (Figure 18C-D) extends in the upstream direction from the outer peripheral edge 300f. A radial wall portion 300g (Figure 18C-D) extends in the upstream direction from the second edge 300e of the flat base 300a. The radial wall portion 300g includes a large primary outlet opening 300h through which a majority of the mixture of exhaust gas and reducing agent exits the mixer 230. The base 300a includes one or more secondary outlet openings 300i which are smaller in size than the primary outlet opening 300h. The secondary outlet openings 300i can be circular or slot shaped, or any combination thereof. Other shapes and different size configurations could also be used. Further, while two slot shaped openings and one circular shaped opening are shown in Figure 15B, fewer or more openings in any shape or size combination, could also be used dependent upon the application.

The extension baffle 300' of Figure 15C is similar to that of the baffle 300 of Figure 15B, but the angle defined by the edges 300d, 300e has been increased to approximately 180 degrees. It should be understood that the angle could be modified to be anywhere between 90 and 180 degrees and could also be increased above 180 degrees or decreased below 90 degrees as needed dependent upon the application.

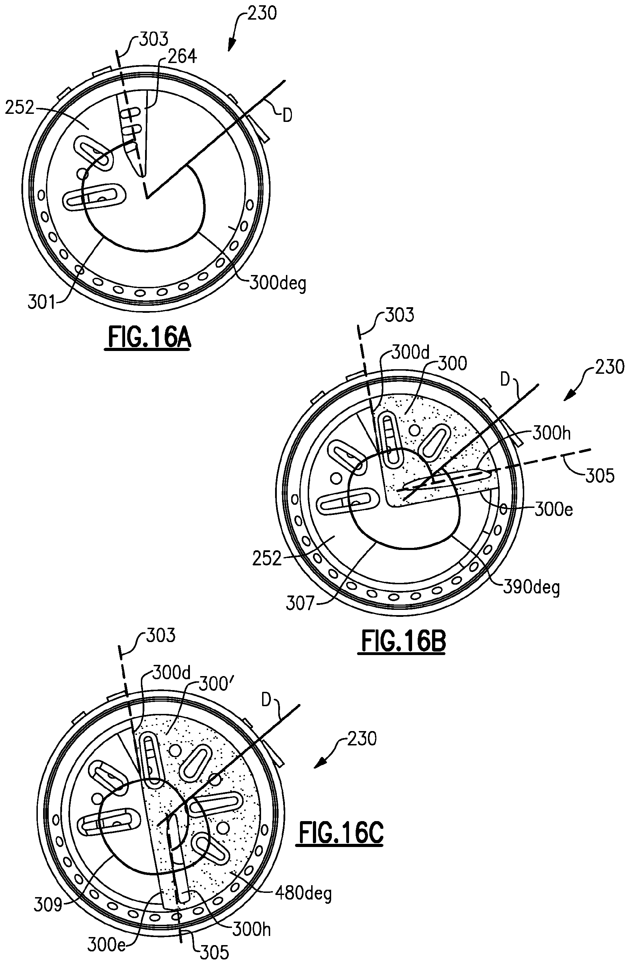

Figure 16A shows the view from the mixer outlet with the primary outlet opening 264 of the downstream baffle 252 being shown in relation to the doser axis D. As indicated by the arrow 301, from an upstream location at the doser axis D to a downstream location at a center axis 303 of the outlet opening 264, there is less than 360 degrees rotation (approximately 300 degrees of rotation is shown in Figure 16A). The embodiments of Figures 16B and 16C provide for significantly more rotation prior to the mixture exiting the mixer 230.

Figure 16B shows a relationship between an outlet from the mixer 230 and the doser axis D for the extension baffle 300 configuration of Figure 15B. The upstream or first edge 300d of the flat base 300a is generally aligned along the center axis 303 of the primary outlet opening 264 of the downstream baffle 252. The primary outlet opening 300h of the extension baffle 300 defines a center axis 305. As indicated by the arrow 307, from an upstream location at the doser axis D to a downstream location at the center axis 305 of the outlet opening 300h of the extension baffle 300, there is approximately 390 degrees rotation, which is a significant improvement over the amount of rotation shown in Figure 16A. Figure 16C provides for even more rotation as indicated by the arrow 309, where from an upstream location at the doser axis D to a downstream location at the center axis 305 of the outlet opening 300h of the extension baffle 300', there is approximately 480 degrees rotation.

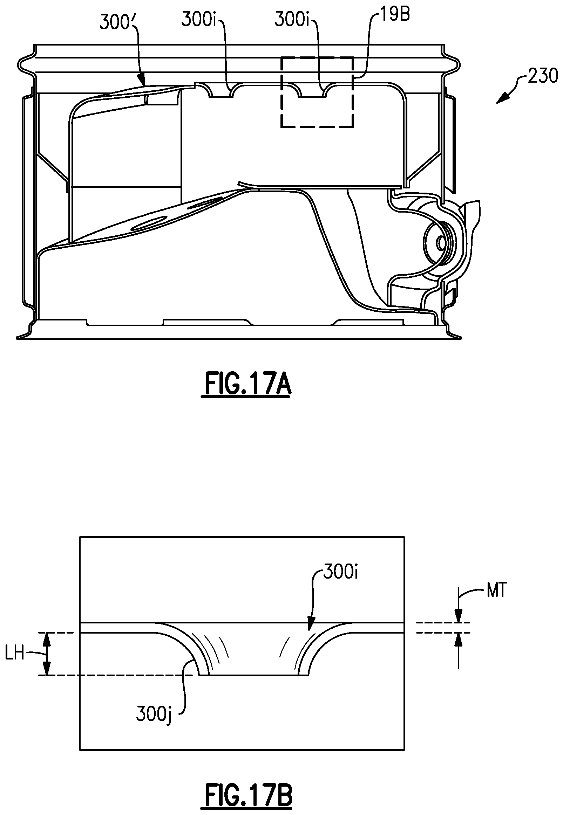

Figure 17A is a section view taken as indicated by line 17A in Figure 15C. This section view is taken through the secondary openings 300i in the extension baffle 300' which are each surrounded by a lip 300j. The lips 300j completely surround each opening 300i and extend in an upstream direction. As shown in the magnified view of Figure 17B, each lip 300j has a lip height LH that extends outwardly from the base 300a to a distal end of the lip 300j. Each lip 300j also has a material thickness MT. In the example shown, the lip height LH is at least three times the material thickness MT. This relationship results in improved performance compared to prior configurations with shorter lips or no lips. It should be understood that the lip configuration for the extension baffle 300' as shown in Figure 15C could also be used for the lips 300j in the extension baffle 300. Further, the relationship of the lip height being three times the material thickness is also used for the lips 268 in the secondary openings 262, 266 for the upstream 250 and downstream 252 baffles. In one example, the lips 300j extend to completely surround the respective opening.

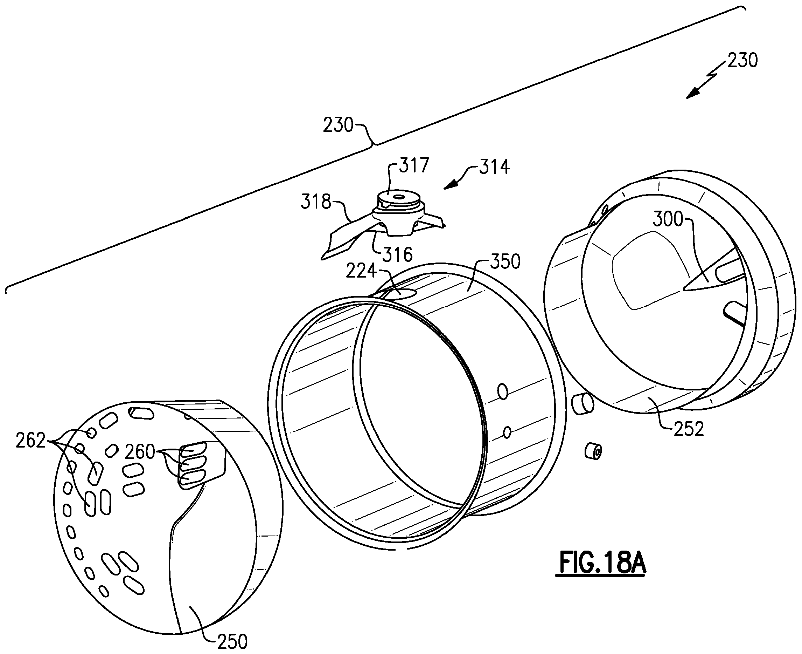

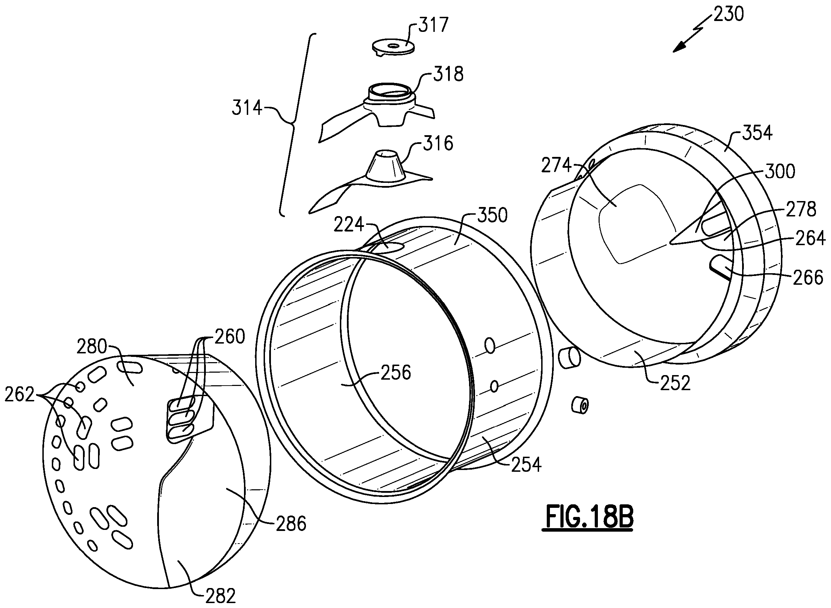

Figures 18A-D show exploded views of the mixer 230 that correspond to the configuration shown in Figures 10-11 and 15B. The upstream baffle 250 and the downstream baffle 252 are mounted to a ring-shaped structure 350 which includes the doser opening 224. The sub-assembly 314 of the cone plate 316 and manifold 318 is associated with the doser opening 224. Figure 18B shows an exploded view of the sub-assembly 314. A mounting plate 317 for the doser 36 is attached to the manifold 318 and cone plate 316 assembly. Figures 18C-D show an exploded view of the downstream baffle 252 and extension baffle 300. An additional mounting ring 354 can be used to second these components to the rest of the assembly as shown in Figures 18A-B.

The subject invention provides a compact mixer that allows 300 up to 480 or greater degrees of flow rotation in order to increase mixing performance and DEF transformation. Further, as discussed above, this improved performance is provided without increasing the axial length of the mixer and, further, does not adversely affect back pressure. For example, this significant amount of rotation is provided within a mixer having an overall length that is between 17.8 cm and 25.4 cm (7 and 10 inches).

Although an embodiment of this invention has been disclosed, a worker of ordinary skill in this art would recognize that certain modifications would come within the scope of this invention. The following claims determine the scope and content of this invention.

## Claims

1. A mixer (30, 230) for a vehicle exhaust system (10) comprising:
a mixer housing defining a mixer central axis (A) and having an inlet (42) at an upstream end and an outlet (44) at a downstream end;
an upstream baffle (50, 250) positioned within the mixer housing at the upstream end and including at least one inlet opening (60, 62, 260, 262) configured to receive engine exhaust gas;
a downstream baffle (52, 252) positioned within the mixer housing at the downstream end such that the downstream baffle (52, 252) is axially spaced from the upstream baffle (50, 250) in a direction along the mixer central axis (A), the downstream baffle (52, 252) including at least one outlet opening (64, 66, 264, 266);
a housing opening (92) formed within the mixer housing at a location between the upstream and downstream baffles (50, 52, 250, 252), the housing opening (92) configured to receive a doser (36) defining a doser axis (D);
a sub-assembly (94, 314) that is aligned with the housing opening (92) to facilitate mounting of the doser (36), the sub-assembly (94) including a cone (96, 200), a manifold (98, 220, 318) and an intermediate plate (100),
**characterized in that**
the cone (96, 200) includes a cone outlet opening (96d) aligned with the housing opening (92), a tapered body portion (96e) that extends from a narrow end (96a) to a wide end (96c), and an extension transition portion (96f, 214) that extends from the wide end (96c) of the cone (96) to provide a wall (96g) that surrounds the cone outlet opening (96d),
wherein the manifold (98, 220, 318) includes an interface portion (98a) with a doser opening (98b) that is aligned with the housing opening (92), one or more attachment arms (98c) that extend from the interface portion (98a) in a direction towards the wall (96g) of the cone (96), and one or more flanges (98d) that extend from the interface portion (98a) toward the wall (96g) of the cone (96),
wherein the one or more attachment arms (98c) and the one or more flanges (98d) are disposed to create one or more chambers (99) shaped to direct the engine exhaust gas to the doser opening (98b), and
wherein the intermediate plate (100, 202) comprises a wedge-shape having an apex (102) near a mixer central axis (A) and widening radially outward in a direction toward the outer housing, and wherein the intermediate plate (100, 202) comprises a flat portion (104) defined by a first edge (106) extending radially outward from the apex (102), a second edge (108) extending radially outward from the apex (102) and circumferentially spaced from the first edge (106), and an outer peripheral edge (110) connecting the first and second edges (106, 108) to define the wedge-shape.

2. The mixer (30, 230) according to claim 1 wherein a doser (36) attached to the mixer (30, 230) is configured to spray a reducing agent into an area between the upstream baffle (50, 250) and the downstream baffle (52, 252) such that a mixture of reducing agent and exhaust gas exits the mixer housing and the mixture moves through a rotational flow path that is at least 360 degrees before exiting the mixer housing.

3. The mixer (30, 230) according to claim 2 wherein
the upstream baffle (50, 250) includes a first portion, a second portion offset from the first portion in a direction along the mixer central axis (A), and a third portion that transitions from the first portion to the second portion, and wherein the at least one inlet opening (60, 62, 260, 262) comprises at least one primary inlet opening (60, 260) and one or more secondary inlet openings (62, 262), and
the downstream baffle (52, 252) includes a first portion, a second portion offset from the first portion in a direction along the mixer central axis (A), and a third portion that transitions from the first portion to the second portion, and wherein the at least one outlet opening (64, 66, 264, 266) comprises at least one primary outlet opening (64, 264) and one or more secondary outlet openings (66, 266).

4. The mixer (30, 230) according to claim 3 including an extension baffle (300) positioned within the mixer housing downstream of the downstream baffle (52, 252), the extension baffle (300) including at least one main outlet opening such that from an upstream location between the upstream baffle (50, 250) and downstream baffle (52, 252) at the doser axis (A) to a downstream location at a center axis of the extension baffle main outlet opening such that the mixture may go through at least 390 degrees rotation.

5. The mixer (30, 230) according to claim 4 wherein the extension baffle (300) comprises a generally flat base (300a) with circumferential wall portion (300b) extending in an upstream direction from an outer peripheral edge of the base (300a), and wherein the base has a center (300c) near the mixer central axis (A) and widens outwardly in a direction toward the circumferential wall portion (54, 254), and wherein the base (300a) is defined by a first edge (300d) extending radially outward from the center and a second edge (300e) extending radially outward from the center and circumferentially spaced from the first edge (300d).

6. The mixer (30, 230) according to claim 5 wherein the angle defined between the first and second edges (300d, 300e) is at least 90 degrees, more particular at least 180 degrees such that the mixture goes through at least 480 degrees rotation.

7. The mixer (30, 230) according to claim 5 wherein the first edge (300d) comprises an inlet side or upstream side of the extension baffle (300) and the second edge (300e) comprises an outlet side or downstream side of the extension baffle (300), and wherein a radial wall portion (300g) extends in the upstream direction from the second edge (300e) of the flat base (300a), and wherein the radial wall portion (300g) includes the main outlet opening (300h, 300i).

8. The mixer (30, 230) according to claim 7 wherein the extension baffle (300) includes at least one baffle secondary opening (300i) formed in the base (3000a), wherein the baffle secondary opening (300i) is smaller than the main outlet opening (300h), in particular wherein the at least one baffle secondary opening (300i) is surrounded by a lip (399j) that extends away from the base (300a) to define a lip height (LH) that is at least three times a material thickness of the extension baffle (300).

9. The mixer (30, 230) according to claim 8 wherein the first edge (300d) of the extension baffle (300) is generally aligned with the primary outlet opening (300h) of the downstream baffle (252) in a direction along the mixer central axis (A).

10. The mixer (30, 230) according to claim 9 wherein at least one of the secondary inlet and outlet openings (62, 262, 66, 266, 300i), includes a lip (300j), and wherein the lip (300j) extends away from a respective one of the upstream baffle (250) and the downstream baffle (52, 252) to define a lip height (LH) that is at least three times a material thickness of the respective one of the upstream baffle (250) and the downstream baffle (52, 252) and/or wherein the first portion of the upstream baffle (50, 250) comprises a first flat surface, the second portion comprises a second flat surface that is smaller than the first flat surface, and the third portion comprises a helical surface that transitions from the first flat surface to the second flat surface, and wherein the upstream baffle (50, 250) includes a vertical wall portion (290) extending between the first and second flat surface which includes the at least one primary inlet opening (60, 260).

11. The mixer (30, 230) according to claim 10 wherein the at least one primary inlet opening (60, 260) comprises at least three inlet openings formed in the vertical wall portion (290) and/or wherein the first flat surface comprises at least half of the upstream baffle.

12. The mixer (30, 230) according to claim 11 wherein the one or more secondary inlet openings (262) are only formed within the first flat surface of the upstream baffle (252) with a remaining portion of the upstream baffle (252) being free from secondary inlet openings (262).

13. The mixer (30, 230) according to claim 12 wherein the first portion of the downstream baffle (52,252) comprises a first flat surface, the second portion comprises a second flat surface offset from the first flat surface, and the third portion comprises a helical surface that transitions from the first flat surface to the second flat surface, and wherein the primary outlet opening (64, 264) comprises an open area formed within a vertical offset between the first and second flat surfaces of the downstream baffle (52, 252).

14. The mixer (30, 230) according to claim 13 wherein at least half of the downstream baffle (52, 252) has a solid surface free from secondary outlet openings (266, 66), and wherein the solid surface of the downstream baffle (252, 52) is aligned with the doser axis (D) such that a spray zone defined by the doser (36) extends over the solid surface without encountering any secondary outlet openings (266, 66).

15. The mixer (30, 230) according to any of the preceding claims wherein the intermediate plate (100, 202) is positioned between the upstream and downstream baffles (20, 52, 250, 252), the intermediate plate (100, 202) being attached to the extension portion (214), wherein the extension portion (214) is connected to the intermediate plate (100, 202) along at least a portion of the outer peripheral edge, and wherein the intermediate plate (100, 202) includes a flange portion (112) extending outwardly from the outer peripheral edge, and wherein an edge of the flange portion (112) is attached to the extension portion (214).

## Patentansprüche

1. Mischer (30, 230) für ein Fahrzeugabgassystem (10), umfassend:
ein Mischergehäuse, das eine Mischermittelachse (a) definiert und einen Einlass (42) an einem vorgelagerten Ende und einen Auslass (44) an einem nachgelagerten Ende aufweist;
ein vorgelagertes Leitblech (50, 250), das innerhalb des Mischergehäuses am vorgelagerten Ende positioniert ist und mindestens eine Einlassöffnung (60, 62, 260, 262) einschließt, die konfiguriert ist, um Motorabgas zu empfangen;
ein nachgelagertes Leitblech (52, 252), das innerhalb des Mischergehäuses am nachgelagerten Ende so positioniert ist, dass das nachgelagerte Leitblech (52, 252) axial von dem vorgelagerten Leitblech (50, 250) in einer Richtung entlang der Mischermittelachse (A) beabstandet ist, wobei das nachgelagerte Leitblech (52, 252) mindestens eine Auslassöffnung (64, 66, 264, 266) einschließt;
eine Gehäuseöffnung (92), die innerhalb des Mischergehäuses an einer Stelle zwischen den vorgelagerten und nachgelagerten Leitblechen (50, 52, 250, 252) ausgebildet ist, wobei die Gehäuseöffnung (92) konfiguriert ist, um einen Dosierer (36) aufzunehmen, der eine Dosiererachse (D) definiert;
eine Unterbaugruppe (94, 314), die mit der Gehäuseöffnung (92) ausgerichtet ist, um die Montage des Dosierers (36) zu erleichtern, wobei die Unterbaugruppe (94) einen Kegel (96, 200), einen Verteiler (98, 220, 318) und eine Zwischenplatte (100) einschließt,
**dadurch gekennzeichnet, dass** der Kegel (96, 200) eine Kegelauslassöffnung (96d) einschließt, die mit der Gehäuseöffnung (92) ausgerichtet ist, einen sich verjüngenden Körperabschnitt (96e), der sich von einem schmalen Ende (96a) zu einem breiten Ende (96c) erstreckt, und einen Verlängerungsübergangsabschnitt (96f, 214), der sich von dem breiten Ende (96c) des Kegel (96) erstreckt, um eine Wand (96g) bereitzustellen, welche die Kegelauslassöffnung (96d) umgibt,
wobei der Verteiler (98, 220, 318) einen Schnittstellenabschnitt (98a) mit einer Dosiereröffnung (98b) einschließt, die mit der Gehäuseöffnung (92) ausgerichtet ist, einen oder mehrere Befestigungsarme (98c), die sich von dem Schnittstellenabschnitt (98a) in einer Richtung zu der Wand (96g) des Kegels (96) erstrecken, und einen oder mehrere Flansche (98d), die sich von dem Schnittstellenabschnitt (98a) zu der Wand (96g) des Kegels (96) erstrecken,
wobei der eine oder die mehreren Befestigungsarme (98c) und der eine oder die mehreren Flansche (98d) angeordnet sind, um eine oder mehrere Kammern (99) zu erzeugen, die so geformt sind, dass sie das Motorabgas in die Dosiereröffnung (98b) lenken, und
wobei die Zwischenplatte (100, 202) eine Keilform aufweist, die einen Scheitelpunkt (102) nahe einer Mischermittelachse (a) aufweist und sich radial nach außen in einer Richtung zum Außengehäuse hin erweitert, und wobei die Zwischenplatte (100, 202) einen flachen Abschnitt (104) umfasst, der durch eine erste Kante (106) definiert ist, die sich von dem Scheitelpunkt (102) radial nach außen erstreckt, wobei sich eine zweite Kante (108) von dem Scheitelpunkt (102) radial nach außen erstreckt und in Umfangsrichtung von der ersten Kante (106) beabstandet ist, und eine Außenumfangskante (110), welche die erste und die zweite Kante (106, 108) verbindet, um die Keilform zu definieren.

2. Mischer (30, 230) nach Anspruch 1, wobei ein Dosierer (36), der an dem Mischer (30, 230) befestigt ist, konfiguriert ist, um ein Reduktionsmittel in einen Bereich zwischen dem vorgelagerten Leitblech (50, 250) und dem nachgelagerten Leitblech (52, 252) zu sprühen, sodass ein Gemisch aus Reduktionsmittel und Abgas aus dem Mischergehäuse austritt und sich das Gemisch durch einen Rotationsströmungsweg bewegt, der mindestens 360 Grad beträgt, bevor es aus dem Mischergehäuse austritt.

3. Mischer (30, 230) nach Anspruch 2, wobei
das vorgelagerte Leitblech (50, 250) einen ersten Abschnitt, einen zweiten Abschnitt, der von dem ersten Abschnitt in einer Richtung entlang der Mischermittelachse (a) versetzt ist, und einen dritten Abschnitt einschließt, der von dem ersten Abschnitt in den zweiten Abschnitt übergeht, und wobei die mindestens eine Einlassöffnung (60, 62, 260, 262) mindestens eine primäre Einlassöffnung (60, 260) und eine oder mehrere sekundäre Einlassöffnungen (62, 262) umfasst, und
das nachgelagerte Leitblech (52, 252) einen ersten Abschnitt, einen zweiten Abschnitt, der von dem ersten Abschnitt in einer Richtung entlang der Mischermittelachse (a) versetzt ist, und einen dritten Abschnitt einschließt, der von dem ersten Abschnitt in den zweiten Abschnitt übergeht, und wobei die mindestens eine Auslassöffnung (64, 66, 264, 266) mindestens eine primäre Auslassöffnung (64, 264) und eine oder mehrere sekundäre Auslassöffnungen (66, 266) umfasst.

4. Mischer (30, 230) nach Anspruch 3, der ein Verlängerungsleitblech (300) einschließt, das innerhalb des Mischergehäuses dem nachgelagerten Leitblechs (52, 252) nachgelagert positioniert ist, wobei das Verlängerungsleitblech (300) mindestens einen Hauptauslassöffnung einschließt, sodass von einer vorgelagerten Stelle zwischen dem vorgelagerten Leitblech (50, 250) und dem nachgelagerten Leitblech (52, 252) an der Dosiererachse (A) zu einer nachgelagerten Stelle an einer Mittelachse der Hauptauslassöffnung des Verlängerungsleitblechs vorhanden ist, sodass das Gemisch eine 390 Grad-Rotation durchlaufen kann.

5. Mischer (30, 230) nach Anspruch 4, wobei das Verlängerungsleitblech (300) eine im Allgemeinen flache Basis (300a) mit einem Umfangswandabschnitt (300b) umfasst, die sich in einer vorgelagerten Richtung von einer äußeren Umfangskante der Basis (300a) erstreckt, und wobei die Basis eine Mitte (300c) nahe der Mischermittelachse (A) aufweist und sich in einer Richtung in Richtung des Umfangswandabschnitts (54, 254) nach außen erweitert, und wobei die Basis (300a) durch eine erste Kante (300d) definiert ist, die sich von der Mitte radial nach außen erstreckt und einer zweiten Kante (300e), die sich von der Mitte radial nach außen erstreckt und in Umfangsrichtung von der ersten Kante (300d) beabstandet ist.

6. Mischer (30, 230) nach Anspruch 5, wobei der Winkel, der zwischen der ersten und der zweiten Kante (300d, 300e) definiert ist, mindestens 90 Grad, genauer mindestens 180 Grad, beträgt, sodass das Gemisch mindestens 480 Grad einer Rotation durchläuft.

7. Mischer (30, 230) nach Anspruch 5, wobei die erste Kante (300d) eine Einlassseite oder vorgelagerte Seite des Verlängerungsleitblechs (300) umfasst und die zweite Kante (300e) eine Auslassseite oder nachgelagerte Seite des Verlängerungsleitblechs (300) umfasst, und wobei sich ein radialer Wandabschnitt (300 g) in der vorgelagerten Richtung von der zweiten Kante (300e) der flachen Basis (300a) erstreckt, und wobei der radiale Wandabschnitt (300 g) die Hauptauslassöffnung (300h, 300i) einschließt.

8. Mischer (30, 230) nach Anspruch 7, wobei das Verlängerungsleitblech (300) mindestens eine Leitblechsekundäröffnung (300i) einschließt, die in der Basis (3000a) ausgebildet ist, wobei die Leitblechsekundäröffnung (300i) kleiner als die Hauptauslassöffnung (300h) ist, wobei insbesondere die wenigstens eine Leitblechsekundäröffnung (300i) von einer Lippe (399j) umgeben ist, die sich von der Basis (300a) weg erstreckt, um eine Lippenhöhe (LH) zu definieren, die mindestens dreimal eine Materialdicke des Verlängerungsleitblechs (300) beträgt.

9. Mischer (30, 230) nach Anspruch 8, wobei die erste Kante (300d) des Verlängerungsleitblechs (300) im Allgemeinen mit der primären Auslassöffnung (300h) des nachgelagerten Leitblechs (252) in einer Richtung entlang der Mischermittelachse (A) ausgerichtet ist.

10. Mischer (30, 230) nach Anspruch 9, wobei mindestens eine der sekundären Einlass- und Auslassöffnungen (62, 262, 66, 266, 300i) eine Lippe (300j) einschließt, und wobei sich die Lippe (300j) von einem jeweiligen der vorgelagerten Leitbleche (250) und der nachgelagerten Leitbleche (52, 252) weg erstreckt, um eine Lippenhöhe (LH) zu definieren, die mindestens dreimal eine Materialdicke des jeweiligen der vorgelagerten Leitbleche (250) und der nachgelagerten Leitbleche (52, 252) beträgt, und/oder wobei der erste Abschnitt des vorgelagerten Leitblechs (50, 250) eine erste flache Oberfläche umfasst, wobei der zweite Abschnitt eine zweite flache Oberfläche umfasst, die kleiner als die erste flache Oberfläche ist, und wobei der dritte Abschnitt eine spiralförmige Oberfläche umfasst, die von der ersten flachen Oberfläche zu der zweiten flachen Oberfläche übergeht, und wobei das vorgelagerte Leitblech (50, 250) einen vertikalen Wandabschnitt (290) einschließt, der sich zwischen der ersten und der zweiten flachen Oberfläche erstreckt, die mindestens eine primäre Einlassöffnung (60, 260) einschließt.

11. Mischer (30, 230) nach Anspruch 10, wobei die mindestens eine primäre Einlassöffnung (60, 260) mindestens drei Einlassöffnungen umfasst, die in dem vertikalen Wandabschnitt (290) ausgebildet sind, und/oder wobei die erste flache Oberfläche mindestens die Hälfte des vorgelagerten Leitblechs umfasst.

12. Mischer (30, 230) nach Anspruch 11, wobei die eine oder die mehreren sekundären Einlassöffnungen (262) nur innerhalb der ersten flachen Oberfläche des vorgelagerten Leitblechs (252) ausgebildet sind, wobei ein verbleibender Abschnitt des vorgelagerten Leitblechs (252) frei von sekundären Einlassöffnungen (262) ist.

13. Mischer (30, 230) nach Anspruch 12, wobei der erste Abschnitt des nachgelagerten Leitblechs (52, 252) eine erste flache Oberfläche umfasst, wobei der zweite Abschnitt eine zweite flache Oberfläche umfasst, die von der ersten flachen Oberfläche versetzt ist, und der dritte Abschnitt eine spiralförmige Oberfläche umfasst, die von der ersten flachen Oberfläche zu der zweiten flachen Oberfläche übergeht, und wobei die primäre Auslassöffnung (64, 264) einen offenen Bereich umfasst, der innerhalb eines vertikalen Versatzes zwischen der ersten und der zweiten flachen Oberfläche des nachgelagerten Leitblechs (52, 252) ausgebildet ist.

14. Mischer (30, 230) nach Anspruch 13, wobei mindestens die Hälfte des nachgelagerten Leitblechs (52, 252) eine feste Oberfläche aufweist, die frei von sekundären Auslassöffnungen (266, 66) ist, und wobei die feste Oberfläche des nachgelagerten Leitblechs (252, 52) mit der Dosiererachse (D) so ausgerichtet ist, dass sich eine durch den Dosierer (36) definierte Sprühzone über die feste Oberfläche erstreckt, ohne auf sekundäre Auslassöffnungen (266, 66) zu treffen.

15. Mischer (30, 230) nach einem der vorstehenden Ansprüche, wobei die Zwischenplatte (100, 202) zwischen den vorgelagerten und nachgelagerten Leitblechen (20, 52, 250, 252) positioniert ist, wobei die Zwischenplatte (100, 202) an dem Verlängerungsabschnitt (214) befestigt ist, wobei der Verlängerungsabschnitt (214) entlang mindestens eines Abschnitts der äußeren Umfangskante mit der Zwischenplatte (100, 202) verbunden ist, und wobei die Zwischenplatte (100, 202) einen Flanschabschnitt (112) einschließt, der sich von der äußeren Umfangskante nach außen erstreckt, und wobei eine Kante des Flanschabschnitts (112) an dem Verlängerungsabschnitt (214) befestigt ist.

## Revendications

1. Mélangeur (30, 230) pour un système d'échappement de véhicule (10) comprenant :
un logement de mélangeur définissant un axe central de mélangeur (A) et ayant une entrée (42) au niveau d'une extrémité amont et une sortie (44) au niveau d'une extrémité aval ;
un déflecteur amont (50, 250) positionné à l'intérieur du logement de mélangeur au niveau de l'extrémité amont et comportant au moins une ouverture d'entrée (60, 62, 260, 262) configurée pour recevoir un gaz d'échappement de moteur ;
un déflecteur aval (52, 252) positionné à l'intérieur du logement de mélangeur au niveau de l'extrémité aval de telle sorte que le déflecteur aval (52, 252) est axialement espacé du déflecteur amont (50, 250) dans une direction le long de l'axe central de mélangeur (A), le déflecteur aval (52, 252) comportant au moins une ouverture de sortie (64, 66, 264, 266) ;
une ouverture de logement (92) formée à l'intérieur du logement de mélangeur au niveau d'un emplacement entre les déflecteurs amont et aval (50, 52, 250, 252), l'ouverture de logement (92) étant configurée pour recevoir un doseur (36) définissant un axe de doseur (D) ;
un sous-ensemble (94, 314) qui est aligné avec l'ouverture de logement (92) pour faciliter le montage du doseur (36), le sous-ensemble (94) comportant un cône (96, 200), un collecteur (98, 220, 318) et une plaque intermédiaire (100),
**caractérisé en ce que** le cône (96, 200) comporte une ouverture de sortie de cône (96d) alignée avec l'ouverture de logement (92), une partie de corps effilée (96e) qui s'étend à partir d'une extrémité étroite (96a) jusqu'à une extrémité large (96c), et une partie de transition d'extension (96f, 214) qui s'étend à partir de l'extrémité large (96c) du cône (96) pour fournir une paroi (96g) qui entoure l'ouverture de sortie de cône (96d),
dans lequel le collecteur (98, 220, 318) comporte une partie d'interface (98a) avec une ouverture de doseur (98b) qui est alignée avec l'ouverture de logement (92), un ou plusieurs bras de fixation (98c) qui s'étendent à partir de la partie d'interface (98a) dans une direction vers la paroi (96g) du cône (96), et une ou plusieurs brides (98d) qui s'étendent à partir de la partie d'interface (98a) vers la paroi (96g) du cône (96),
dans lequel les un ou plusieurs bras de fixation (98c) et les une ou plusieurs brides (98d) sont disposés pour créer une ou plusieurs chambres (99) formées pour diriger le gaz d'échappement de moteur vers l'ouverture de doseur (98b), et
dans lequel la plaque intermédiaire (100, 202) comprend une forme en coin ayant un sommet (102) près d'un axe central de mélangeur (A) et s'élargissant radialement vers l'extérieur dans une direction vers le logement externe, et dans lequel la plaque intermédiaire (100, 202) comprend une partie plate (104) définie par un premier bord (106) s'étendant radialement vers l'extérieur à partir du sommet (102), un second bord (108) s'étendant radialement vers l'extérieur à partir du sommet (102) et espacé circonférentiellement du premier bord (106), et un bord périphérique externe (110) reliant les premier et second bords (106, 108) pour définir la forme en coin.

2. Mélangeur (30, 230) selon la revendication 1, dans lequel un doseur (36) fixé au mélangeur (30, 230) est configuré pour pulvériser un agent réducteur dans une zone entre le déflecteur amont (50, 250) et le déflecteur aval (52, 252) de telle sorte qu'un mélange d'agent réducteur et de gaz d'échappement sort du logement de mélangeur et le mélange se déplace à travers un trajet d'écoulement rotatif qui est d'au moins 360 degrés avant de sortir du logement de mélangeur.

3. Mélangeur (30, 230) selon la revendication 2, dans lequel
le déflecteur amont (50, 250) comporte une première partie, une deuxième partie décalée de la première partie dans une direction le long de l'axe central de mélangeur (A), et une troisième partie qui passe de la première partie à la deuxième partie, et dans lequel l'au moins une ouverture d'entrée (60, 62, 260, 262) comprend au moins une ouverture d'entrée primaire (60, 260) et une ou plusieurs ouvertures d'entrée secondaires (62, 262), et
le déflecteur aval (52, 252) comporte une première partie, une deuxième partie décalée de la première partie dans une direction le long de l'axe central de mélangeur (A), et une troisième partie qui passe de la première partie à la deuxième partie, et dans lequel l'au moins une ouverture de sortie (64, 66, 264, 266) comprend au moins une ouverture de sortie primaire (64, 264) et une ou plusieurs ouvertures de sortie secondaires (66, 266).

4. Mélangeur (30, 230) selon la revendication 3, comportant un déflecteur d'extension (300) positionné à l'intérieur du logement de mélangeur en aval du déflecteur aval (52, 252), le déflecteur d'extension (300) comportant au moins une ouverture de sortie principale telle qu'à partir d'un emplacement en amont entre le déflecteur amont (50, 250) et le déflecteur aval (52, 252) au niveau de l'axe de doseur (A) jusqu'à un emplacement en aval au niveau d'un axe central de l'ouverture de sortie principale de déflecteur d'extension de telle sorte que le mélange peut subir une rotation d'au moins 390 degrés.

5. Mélangeur (30, 230) selon la revendication 4, dans lequel le déflecteur d'extension (300) comprend une base généralement plate (300a) avec une partie de paroi circonférentielle (300b) s'étendant dans une direction amont à partir d'un bord périphérique externe de la base (300a), et dans lequel la base a un centre (300c) près de l'axe central de mélangeur (A) et s'élargit vers l'extérieur dans une direction vers la partie de paroi circonférentielle (54, 254), et dans lequel la base (300a) est définie par un premier bord (300d) s'étendant radialement vers l'extérieur à partir du centre et un second bord (300e) s'étendant radialement vers l'extérieur à partir du centre et circonférentiellement espacé du premier bord (300d).

6. Mélangeur (30, 230) selon la revendication 5, dans lequel l'angle défini entre les premier et second bords (300d, 300e) est d'au moins 90 degrés, plus particulièrement d'au moins 180 degrés de telle sorte que le mélange subit une rotation d'au moins 480 degrés.

7. Mélangeur (30, 230) selon la revendication 5, dans lequel le premier bord (300d) comprend un côté d'entrée ou un côté amont du déflecteur d'extension (300) et le second bord (300e) comprend un côté de sortie ou un côté aval du déflecteur d'extension (300), et dans lequel une partie de paroi radiale (300g) s'étend dans la direction amont à partir du second bord (300e) de la base plate (300a), et dans lequel la partie de paroi radiale (300g) comporte l'ouverture de sortie principale (300h, 300i).

8. Mélangeur (30, 230) selon la revendication 7, dans lequel le déflecteur d'extension (300) comporte au moins une ouverture secondaire de déflecteur (300i) formée dans la base (3000a), l'ouverture secondaire de déflecteur (300i) étant plus petite que l'ouverture de sortie principale (300h), en particulier dans lequel l'au moins une ouverture secondaire de déflecteur (300i) est entourée par une lèvre (399j) qui s'étend à distance de la base (300a) pour définir une hauteur de lèvre (LH) qui est au moins trois fois une épaisseur de matériau du déflecteur d'extension (300).

9. Mélangeur (30, 230) selon la revendication 8, dans lequel le premier bord (300d) du déflecteur d'extension (300) est généralement aligné avec l'ouverture de sortie primaire (300h) du déflecteur aval (252) dans une direction le long de l'axe central de mélangeur (A).

10. Mélangeur (30, 230) selon la revendication 9, dans lequel au moins l'une des ouvertures d'entrée et de sortie secondaires (62, 262, 66, 266, 300i) comporte une lèvre (300j), et dans lequel la lèvre (300j) s'étend à distance d'un déflecteur respectif parmi le déflecteur amont (250) et le déflecteur aval (52, 252) pour définir une hauteur de lèvre (LH) qui est au moins trois fois une épaisseur de matériau de l'un respectif du déflecteur amont (250) et du déflecteur aval (52, 252) et/ou dans lequel la première partie du déflecteur amont (50, 250) comprend une première surface plate, la deuxième partie comprend une seconde surface plate qui est plus petite que la première surface plate, et la troisième partie comprend une surface hélicoïdale qui passe de la première surface plate à la seconde surface plate, et dans lequel le déflecteur amont (50, 250) comporte une partie de paroi verticale (290) s'étendant entre la première et la seconde surface plate qui comporte l'au moins une ouverture d'entrée primaire (60, 260).

11. Mélangeur (30, 230) selon la revendication 10, dans lequel l'au moins une ouverture d'entrée primaire (60, 260) comprend au moins trois ouvertures d'entrée formées dans la partie de paroi verticale (290) et/ou dans lequel la première surface plate comprend au moins la moitié du déflecteur amont.

12. Mélangeur (30, 230) selon la revendication 11, dans lequel les une ou plusieurs ouvertures d'entrée secondaires (262) sont formées uniquement à l'intérieur de la première surface plate du déflecteur amont (252) avec une partie restante du déflecteur amont (252) étant exempte d'ouvertures d'entrée secondaires (262).

13. Mélangeur (30, 230) selon la revendication 12, dans lequel la première partie du déflecteur aval (52, 252) comprend une première surface plate, la deuxième partie comprend une seconde surface plate décalée de la première surface plate, et la troisième partie comprend une surface hélicoïdale qui passe de la première surface plate à la seconde surface plate, et dans lequel l'ouverture de sortie primaire (64, 264) comprend une zone ouverte formée à l'intérieur d'un décalage vertical entre les première et seconde surfaces plates du déflecteur aval (52, 252).

14. Mélangeur (30, 230) selon la revendication 13, dans lequel au moins la moitié du déflecteur aval (52, 252) a une surface solide exempte d'ouvertures de sortie secondaires (266, 66), et dans lequel la surface solide du déflecteur aval (252, 52) est alignée avec l'axe de doseur (D) de telle sorte qu'une zone de pulvérisation définie par le doseur (36) s'étend sur la surface solide sans rencontrer d'ouvertures de sortie secondaires (266, 66) quelconques.

15. Mélangeur (30, 230) selon l'une quelconque des revendications précédentes, dans lequel la plaque intermédiaire (100, 202) est positionnée entre les déflecteurs amont et aval (20, 52, 250, 252), la plaque intermédiaire (100, 202) étant fixée à la partie d'extension (214), dans lequel la partie d'extension (214) est reliée à la plaque intermédiaire (100, 202) le long d'au moins une partie du bord périphérique externe, et dans lequel la plaque intermédiaire (100, 202) comporte une partie de bride (112) s'étendant vers l'extérieur à partir du bord périphérique externe, et dans lequel un bord de la partie de bride (112) est fixé à la partie d'extension (214).
